# EUROPÄISCHE PATENTSCHRIFT

(11) **EP 4 212 582 B1**
(45) Veröffentlichungstag und Bekanntmachung des Hinweises auf die Patenterteilung: **30.10.2024**
(21) Anmeldenummer: 22197865.3
(22) Anmeldetag: 26.09.2022
(51) Int. Cl.: C08J 11/02, C08J 11/08

(54) **VERFAHREN UND ANLAGE ZUR HERSTELLUNG EINES VORANSTRICHMATERIALS**
METHOD AND APPARATUS FOR PRODUCING A PRIMER MATERIAL
PROCÉDÉ ET INSTALLATION DE PRÉPARATION D'UN MATÉRIAU DE PRÉ-COUCHE

(30) Priorität: 13.01.2022 DE 102022100761
(43) Veröffentlichungstag der Anmeldung: 19.07.2023
(73) Patentinhaber: Soprema GmbH, 68219 Mannheim (DE)
(72) Erfinder: Keßler, Martin, 57520 Langenbach bei Kirburg (DE); König, Thomas, 57299 Burbach (DE)
(74) Vertreter: Patentanwälte Olbricht Buchhold Keulertz

(56) Entgegenhaltungen:
- DE-U1- 202022 100 185

## Beschreibung

Die Erfindung betrifft ein Verfahren zur Herstellung eines Voranstrichmaterials und eine Anlage, um dieses Verfahren durchzuführen. Das Voranstrichmaterial enthält Bitumen, Lösemittel und Additive.

Der Erfindung liegt die Aufgabe zugrunde, ein Verfahren anzugeben, welches die preisgünstige Herstellung des Voranstrichmaterials ermöglicht. Weiterhin liegt der Erfindung die Aufgabe zugrunde, eine zur Durchführung dieses Verfahrens geeignete Anlage anzugeben.

Diese Aufgabe wird durch ein Verfahren nach Anspruch 1 gelöst sowie durch eine Vorrichtung nach Anspruch 16. Vorteilhafte Ausgestaltungen sind in den Unteransprüchen beschrieben.

Die Erfindung schlägt mit anderen Worten vor, Bitumen aus Bitumenbahnen herauszulösen. Dabei legt der Erfindung die Überlegung zugrunde, dass aufgrund strenger Normen, was beispielsweise Abmessungen und Ausgestaltung der Bitumenbahnen betrifft, stets ein gewisser Anteil an Ausschuss bei der Herstellung von Bitumenbahnen anfällt. Statt die Ausschuss-Bitumenbahnen zu entsorgen, was mit weiteren Kosten verbunden ist, werden diese vorschlagsgemäß dazu genutzt, das Voranstrichmaterial herzustellen. Dabei wird der Bitumenanteil aus den Bitumenbahnen herausgelöst, so dass beispielsweise lediglich Abdeckfolien sowie ggf. zur Abdeckung verwendete Bestreuung übrig bleiben. Die zu entsorgenden Materialmenge wird dementsprechend verringert, so dass die Entsorgungskosten erheblich reduziert werden. Außerdem muss kein frisches Bitumen eigens bereitgestellt werden, um daraus das Voranstrichmaterial herzustellen. Während bei der Herstellung des Voranstrichmaterials beispielsweise eine bestimmte Menge an Lösemittel bereitgestellt wird und dann Bitumen zugegeben wird, wird vorschlagsgemäß zunächst Bitumen bereitgestellt, nämlich in Form der Ausschuss-Bitumenbahnen, und dann Lösemittel hinzugefügt, um auf diese Weise den Bitumen-Anteil aus den Bitumenbahnen herauszulösen.

Dabei hat sich in ersten praktischen Versuchen überraschend herausgestellt, dass die Aufbereitung der Bitumenbahnen möglich ist, obwohl die Bitumenbahnen in einem aufgerollten Zustand vorliegen. Sie müssen also nicht zerkleinert werden, z. B. geschnitten oder gehäckselt, um einen großflächigen Kontakt mit dem Lösemittel zu ermöglichen, und dementsprechend wird auch eine Zerkleinerung der Trägerfolie vermieden, was die Weiterverarbeitung der in einem Stück vorliegenden Trägerfolie erheblich erleichtert.

Geht man von handelsüblichen Abmessungen der Bitumenbahn mit etwa 100 cm Breite und 500 cm Länge sowie einer Bitumenschicht von etwa 0,3 cm Dicke aus, so ergibt jede der beiden gegenüberliegenden Oberseiten eine Oberfläche von 50.000 cm² und die schmalen Kanten an jeder Stirnseite eine Oberfläche von 30 cm² sowie an jeder Längsseite eine Oberfläche von 150 cm², so dass die Bitumenschicht der Bitumenbahn insgesamt eine Oberfläche von 100.360 cm² bietet, von der nur die Schmalkanten mit 360 cm² den Kontakt mit dem Lösemittel ermöglichen. Geht man weiter davon aus, dass die nach außen weisende Oberseite der Bitumenschicht am äußeren Umfang der aufgerollten Bitumenbahn freiliegt und dementsprechend ebenfalls den Kontakt mit dem Lösemittel ermöglicht, so ergibt sich bei einem Durchmesser von 35 cm eine freiliegende Fläche von etwa 11.000 cm², so dass letztlich nur ein Flächenanteil von etwa 11,4% vom Lösemittel benetzbar ist. Überraschend hat sich in ersten Versuchen herausgestellt, dass trotz dieser geringen Angriffsfläche die Bitumenschicht in akzeptabler Zeit aufgelöst werden kann. Nach ersten Vermutungen ist dies möglich, weil das Lösemittel auch zwischen die einzelnen Wicklungslagen der aufgerollten Bitumenbahn eindringen kann, auch wenn diese Bereiche nur schlecht durchströmbar sind und daher eine intensive Spülung mit Lösemittel nicht gewährleistet werden kann.

Im Ergebnis kann die gleiche Zusammensetzung von Lösemittelund Bitumen-Anteilen erreicht werden wie bei der herkömmlichen Herstellung eines Voranstrichmaterials. Wenn das Voranstrichmaterial zusätzlich auch Additive enthalten soll, können diese entweder auch bei der vorschlagsgemäßen Herstellung zugegeben werden, ggf. sind die Additive allerdings bereits in der Bitumenbahnen enthalten, so dass entweder gar keine Additive mehr zugeführt werden müssen, um das gewünschte Voranstrichmaterial zu erhalten, oder so dass lediglich eine vergleichsweise geringe Korrektur-Dosierung erfolgen muss, um die bereits vorhandenen Anteile der Additive auf die gewünschte Menge im Voranstrichmaterial anzuheben.

Es werden also zunächst Bitumenbahnen hergestellt. Dies kann beispielsweise in an sich bekannter Art und Weise erfolgen. Von den Bitumenbahnen werden solche Bitumenbahnen ausgesondert, die bestimmte Kriterien nicht erfüllen und daher wirtschaftlich nicht oder nur mit erheblichen Einschränkungen verwertbar sind. Die ausgesonderten Bitumenbahnen werden dann für das vorschlagsgemäße Verfahren verwendet. Dabei sind folgende Verfahrensschritte vorgesehen:
- eine Bitumenbahn wird in einen Behälter eingebracht,
- die Bitumenbahn wird in dem Behälter von einem Lösemittel umspült, welches das Bitumen auflöst, so dass einerseits in der ursprünglich vorhandenen Bitumenbahn Bitumen abgebaut wird und sich das Bitumen im Lösemittel anreichert,
- das Lösemittel wird im Kreislauf geführt, so dass durch die Strömung ein besonders intensiver Kontakt des Lösemittels mit der Bitumenbahn und dem darin enthaltenen Bitumen sichergestellt ist,
- die Konzentration des Bitumens im Lösemittel wird wiederholt oder kontinuierlich ermittelt, um auf diese Weise festzustellen, wann das Lösemittel einen so hohen Bitumenanteil aufweist, dass es für die Verwendung als Voranstrich weiterverarbeitet werden kann oder sogar direkt für die Verwendung als Voranstrich genutzt werden kann,
- wenn die Konzentration des Bitumens im Lösemittel einen vorbestimmten Wert erreicht hat, wird dieses aufkonzentrierte Lösemittel abgezogen und für die Bereit-stellung eines Voranstrichmaterials verwendet,
- nachdem das aufkonzentrierte Lösemittel abgezogen worden ist, wird erneut Lösemittel in den Kreislauf eingebracht, welches eine niedrige oder keine Konzentration von Bitumen aufweist. Als niedrig wird dabei eine Konzentration von Bitumen angesehen, die unterhalb des genannten vorbestimmten Wertes liegt, bei dessen Erreichen das Lösemittel abgezogen wird.

In einer Ausgestaltung des Verfahrens kann vorgesehen sein, dass die Bitumenbahn in Rollenform den Behälter eingebracht wird. Dies entspricht der Art und Weise, wie die Bitumenbahn nach Beendigung ihres Herstellungsprozesses ohnehin vorliegt. Beispielsweise gelangen die Bitumenbahnen typischerweise in Rollenform in den Handel. Zugunsten einer möglichst wirtschaftlichen Ausgestaltung des vorschlagsgemäßen Verfahrens entfällt ein zusätzlicher Verarbeitungsschritt, beispielsweise um die zunächst auf Rolle bereitgestellte Bitumenbahn abzurollen und als flache Bahn bereitzustellen. In ersten Versuchen hat sich überraschend herausgestellt, dass in einer ausreichend kurzen Zeiteinheit das Bitumen vollständig aus der Bitumenbahnen herausgelöst werden kann, obwohl der Angriff des Lösemittels zunächst ausschließlich an den schmalen Kanten der Bitumenschicht erfolgen kann. Anscheinend dringt das Lösemittel jedoch auch bald neben diesen schmalen Kanten zwischen die Bitumenschicht und die nächstbenachbarte Schicht der Rolle, so dass der Bitumenabbau in ausreichend kurzer Zeit erfolgt. Hinzu kommt, dass ohnehin die Herstellungszeit des Voranstrichmaterials nicht notwendigerweise optimiert zu werden braucht, da die für das vorschlagsgemäße Verfahren verwendeten Bitumenbahnen nicht eigens für die Herstellung des Voranstrich produziert werden und in großer Zahl bereitgestellt werden und dementsprechend schnell verarbeitet werden müssen, sondern da es sich vielmehr um Ausschuss handelt, dessen Anteil an der Produktion der Bitumenbahnen aus wirtschaftlichen Gründen ohnehin möglichst gering gehalten wird.

In einer Ausgestaltung des Verfahrens kann vorgesehen sein, dass eine Bitumenbahn verwendet wird, deren Oberseite und / oder Unterseite abgedeckt ist. Auch in diesem Fall wird auf eine eigens vorgesehene Bearbeitung der zunächst herkömmlich hergestellten Bitumenbahn verzichtet. Typischerweise sind die Bitumenbahnen auf ihrer Oberseite abgedeckt, um beispielsweise bei entsprechend hohen Außentemperaturen oder bei entsprechender Sonneneinstrahlung zu vermeiden, dass die Bitumenbahnen aufgrund ihrer Klebrigkeit unerwünschte Fremdkörper binden. Die Abdeckung der Oberseite kann in Form einer Folie ausgestaltet sein, oder durch eine Bestreuung wie z.B. Sand, Schiefer oder dergleichen. Auch an ihrer Unterseite kann die Bitumenbahn eine Abdeckfolie aufweisen, nach deren Entfernung die Bitumenbahn selbstklebend verarbeitet werden kann. Die Oberseite und / oder Unterseite der Bitumenbahn können dementsprechend mit einer Kunststofffolie, einer Papierbahn, einer Bestreuung mit mineralischen Körperchen oder dergleichen abgedeckt sein. Derartige Abdeckungen behindern, wie oben erwähnt, den Bitumenabbau durch das Lösemittel nicht in einem unzuträglichen Ausmaß. Wenn das Bitumen vollständig aufgelöst worden ist, verbleibt das Abdeckungsmaterial in dem Behälter. Je nach Materialbeschaffenheit kann es bei geöffnetem Behälter beispielsweise nach oben aus dem Behälter entnommen werden, wie dies z.B. für Folien möglich ist, oder es kann sich unten in einem Behältersumpf sammeln und abgelassen werden, wie dies z.B für eine Bestreuung möglich ist.

In einer Ausgestaltung kann eine Bitumenbahn verwendet werden, die eine Trägerschicht aufweist, auf welche eine Bitumenschicht aufkaschiert ist. In diesem Fall verbleibt nicht nur eine ggf. vorhandene Abdeckung, sondern auch die Trägerschicht in dem Behälter, nachdem das Bitumen vollständig aus der Bitumenbahn abgebaut worden ist. Zusätzlich zu den bereits bekannten, für die Abdeckung verwendbaren Materialien können daher weitere Materialien nach Beendigung des Verfahrens als Reststoff im Behälter verbleiben. Beispielsweise kann die Trägerschicht ein Polyestervlies und / oder Glasfaservlies aufweisen.

In einer Ausgestaltung kann der Behälter als Röhre ausgestaltet sein, angepasst daran, dass die Bitumenbahn in Rollenform und dementsprechend in einer zylindrischen Formgebung vorliegt. Mehrere Bitumenbahnen können grundsätzlich in einen nahezu beliebig geformten Behälter eingebracht werden. Eine optimale Einwirkung des Lösemittels auf die Bitumenbahn und insbesondere eine Überwachung, ob das Bitumen der Bitumenbahn vollständig abgebaut worden ist oder nicht, kann jedoch vorteilhaft dadurch erfolgen, dass der Behälter lediglich eine einzige Bitumenbahn enthält. Dementsprechend kann der Behälter vorteilhaft röhrenförmig ausgestaltet sein, um die zylindrische Rolle der Bitumenbahn möglichst platzsparend aufnehmen zu können. Insbesondere kann der Behälter als eine Röhre mit einem kreisrunden Querschnitt ausgestaltet sein, ebenfalls in Anpassung an die zylindrische Formgebung der aufgerollten Bitumenbahn, und unter Vermeidung von schlecht durchströmten Bereichen des Behälters, wie sie beispielsweise bei einem röhrenförmigen Behälter mit quadratischem Querschnitt von Nachteil sein könnten.

In einer Ausgestaltung kann das Lösemittel in einen Sammelbehälter und von dort in den Behälter zurückgeführt werden. Dies ermöglicht erstens den Zugriff auf das Lösemittel an zentraler Stelle, und zweitens kann so auch eine Menge an Lösemittel bereitgestellt werden, die das Volumen des Behälters übersteigt, so dass das zusätzliche Volumen, welches nach der Befüllung des Behälters verbleibt, im Sammelbehälter vorliegt. Wenn je nach Abmessungen der im Behälter zu behandelnden Bitumenbahn der Behälter unterschiedliche Mengen an Lösemittel aufnehmen kann, dient der Sammelbehälter als Ausgleichsbehälter, so dass die Menge des bereitgestellten Lösemittels nicht stets exakt an das Lösemittel-Füllvolumen angepasst zu werden braucht, welches der Behälter, der die Bitumenbahn enthält, aufnehmen kann.

Der Sammelbehälter kann beispielsweise transportabel ausgestaltet sein, so dass frisches Lösemittel in einem solchen Behälter herangeführt werden kann. Weiterhin kann während des Verfahrens das im Kreislauf geführte Lösemittel in den Sammelbehälter gefördert und aus diesem wieder abgezogen werden, und da sich durch das Bitumen, welches in das Lösemittel gelangt, die Menge des Lösemittels während des Verfahrens vergrößert, kann der Sammelbehälter während des Verfahrens auch als Ausgleichsbehälter dienen, der diesen Volumenzuwachs aufnimmt. Nach Abschluss des Verfahrens kann das mit dem gewünschten Anteil an Bitumen angereicherte Lösemittel in dem Sammelbehälter dorthin transportiert werden, wo es weiterverarbeitet werden soll, beispielsweise zu einer nachgeschalteten Produktionseinrichtung, einer Abfüllstation oder dergleichen.

In einer Ausgestaltung des Verfahrens kann vorteilhaft vorgesehen sein, dass das Lösemittel auf eine Temperatur von mehr als 20°C erwärmt wird und im erwärmten Zustand in den Behälter geführt wird. Durch die Temperatur, die oberhalb der sogenannten Raumtemperatur liegt, wird die Reaktionsgeschwindigkeit vergrößert, so dass erstens der Abbau des Bitumens in der Bitumenbahn vorteilhaft schnell erfolgt, und so dass zweitens auch besonders gründlich und mit einem dementsprechend hohen Wirkungsgrad das Bitumen möglichst vollständig aus der Bitumenbahn herausgelöst werden kann.

In einer Ausgestaltung des Verfahrens ist vorgesehen, dass der Behälter geöffnet und Rückstände aus dem Behälter entfernt werden, bevor der Behälter mit einer Bitumenbahn erneut befüllt wird. Diese Verfahrensweise kann insbesondere dann vorteilhaft vorgesehen sein, wenn im Behälter nicht nur Granulat als Rückstand von der Behandlung einer Bitumenbahn zurückbleibt, welches Granulat in einem Sumpf des Behälters gesammelt werden kann, sondern wenn vielmehr Folien als Rückstände im Behälter verbleiben. Die Entfernung der Rückstände stellt stets, und insbesondere im Falle von Folien, eine möglichst ungehinderte Durchströmung des Behälters sicher, so dass das Lösemittel möglichst effizient auf die Bitumenbahn einwirken kann.

In einer Ausgestaltung des Verfahrens kann vorgesehen sein, dass eine verkaufsfertig konfektionierte Bitumenbahn vorbehandelt wird, bevor sie in den Behälter eingebracht wird. Diese Vorbehandlung besteht darin, dass Spannbänder geöffnet oder entfernt werden, welche die aufgerollte Bitumenbahn zusammenhalten, um zugunsten eines möglichst geringen Transport- und Lagervolumens einen geringen Durchmesser der aufgerollten Bitumenbahn zu gewährleisten. Bei den Spannbändern kann es sich beispielsweise um faserverstärkte Selbstklebebänder handeln. Durch die Entfernung der Spannbänder wird das Eindringen des Lösemittels zwischen die einzelnen Wicklungslagen der aufgerollten Bitumenbahn erleichtert, so dass ein möglichst großflächiger Kontakt zwischen dem Lösemittel und dem Bitumen und damit eine möglichst schnelle Auflösung der Bitumenschicht unterstützt wird.

Ggf. kann als ein zweiter Schritt der Vorbehandlung vorgesehen sein, dass die aufgerollte Bitumenbahn nach dem Öffnen oder Entfernen der Spannbänder aufgelockert wird, indem sie z.B. hart auf einem Untergrund aufgesetzt und auf diese Weise mechanisch erschüttert wird. Auf diese Weise können aneinander haftende Wicklungslagen der aufgerollten Bitumenbahn ggf. voneinander getrennt werden, um auf diese Weise das Eindringen des Lösemittels zwischen die Wicklungslagen zu erleichtern.

Beispielsweise kann vorgesehen sein, den Behälter oben mittels eines Deckels zu verschließen, der wahlweise geöffnet werden kann. So können beispielsweise eine unerwünschte Auskühlung des Behälterinhalts oder unerwünschte Emissionen des Lösemittels vermieden oder verringert werden. Um die Bitumenbahn in den Behälter einbringen zu können, wird der Deckel geöffnet und nach dem Einbringen der Bitumenbahn wieder geschlossen.

Bevor eine neue Bitumenbahn in den Behälter eingebracht wird, können vorteilhaft großflächige Reste der zuvor behandelten und weitgehend aufgelösten Bitumenbahn - z.B. deren Träger- und Abdeckfolien - aus dem Behälter entfernt werden, um die Durchströmung des Behälters für die Behandlung der neu eingesetzten Bitumenbahn, nämlich den Zugang des Lösemittels zum Bitumen, nicht zu behindern.

Die Entfernung der erwähnten großflächige Reste z.B. in Form von Träger- und Abdeckfolien aus dem Behälter kann in einer Ausgestaltung der für das Verfahren geeigneten Anlage mithilfe eines Innenbehälters erfolgen. Der Innenbehälter kann in Art eines Siebkorbs ausgestaltet sein, vorteilhaft mit einer sehr großen Maschenweite des Siebs, z.B. einer Maschenweite von mehreren Zentimetern, so dass einerseits die Durchspülung des Behälters möglichst ungehindert erfolgen kann, andererseits jedoch die großflächigen Träger- und Abdeckfolien zuverlässig im Innenbehälter zurückgehalten werden. Der Innenbehälter kann mitsamt den darin zurückgehaltenen großflächigen Resten aus dem Behälter gehoben und anschließend entleert werden. Bestückt mit einer neuen Bitumenbahn kann der Innenbehälter anschließend wieder in den Behälter eingesetzt werden. Es kann jedoch auch ein anderer Verfahrensablauf vorgesehen sein, indem zunächst der leere Innenbehälter in den Behälter zurückgeführt wird und anschließend die neue Bitumenbahn in den Behälter und somit in den Innenbehälter eingebracht wird.

Der Innenbehälter kann oben offen sein, ähnlich wie ein Papierkorb, so dass eine möglichst schnelle, unkomplizierte, prozesssichere und zeitsparende Handhabung bei der Befüllung des Innenbehälters mit einer neuen Bitumenbahn sowie später bei der Entnahme der großflächigen Reste aus dem Innenbehälter gewährleistet ist.

Der Innenbehälter kann nicht nur entlang seiner Umfangs-Mantelfläche sondern auch am Boden Durchbrechungen aufweisen. Kleinere Partikel, die beim Auflösen der Bitumenbahn freigesetzt werden, z.B. Bestreuungsmaterial in Form von Sand, Schieferplättchen oder dergleichen, kann somit Schwerkraft bedingt aus dem Innenbehälter innerhalb des Behälters nach unten absinken oder, bei leichteren Materialien, mit der Strömung des Lösemittels aus dem Innenbehälter und ggf. auch aus dem Behälter ausgetragen werden und beispielsweise in einer Absetzkammer, einem Partikelfilter oder dergleichen gesammelt werden.

Kleinere Partikel, die sich unten im Behälter ansammeln, können vorteilhaft durch einen Auslass aus dem Behälter ausgeschleust werden. Es kann sich dabei um eine Öffnung im Behälterboden handeln, die mittels eines Ventils, einer Ablassschraube oder dergleichen wahlweise geöffnet oder verschlossen werden kann.

In einer als vorteilhaft erachteten Ausgestaltung des Verfahrens ist vorgesehen, dass mehrere Behälter zu einer Gruppe zusammengefasst sind und gleichzeitig mit Lösemittel durchspült werden. Insbesondere wenn ohnehin vorgesehen ist, das Lösemittel im Kreislauf zu führen, können die Behälter in Reihe geschaltet sein, so dass das Lösemittel nacheinander in sämtlicher Behälter gelangt und dann sämtliche Behälter gleichzeitig, aber hintereinandergeschaltet, durchströmt werden. Ein Behälter wird geöffnet und mit einer Bitumenbahn erneut befüllt, wenn das Bitumen aus der zunächst in diesem Behälter befindlichen Bitumenbahn vollständig aufgelöst worden ist.

Während der Entnahme dieser "verbrauchten" Bitumenbahn kann dieser Behälter weiter von dem Lösemittel durchströmt werden, so dass beispielsweise die erwähnte Kreislaufführung des Lösemittels unverändert aufrechterhalten werden kann. Für die Entnahme der "verbrauchten" Bitumenbahn - genauer: von deren Resten - kann alternativ jedoch zunächst die Lösemittelleitung zu diesem Behälter unterbrochen werden, so dass die Durchspülung dieses Behälters ausgesetzt wird. Dies ermöglicht auch bei hohen Strömungsgeschwindigkeiten eine möglichst tropffreie Entnahme der "verbrauchten" Bitumenbahn bzw. von deren Rückständen aus dem Behälter, und insbesondere das anschließende Einsetzen einer neuen Bitumenbahn in den Behälter kann spritz- und kleckerfrei erfolgen, da sich in dem Behälter kein unerwünscht hoher Flüssigkeitspegel des Lösemittels einstellt, bevor die neue Bitumenbahn in den Behälter eingesetzt wird, was ggf. zu einem Überlaufen des Behälters führen könnte.

Jedenfalls ist bei dieser Ausgestaltung des Verfahrens vorgesehen, dass während des Bitumenbahn-Wechsels des betreffenden Behälters die anderen Behälter derselben Gruppe weiterhin mit dem Lösemittel durchspült werden. Insbesondere da bevorzugt Ausschuss-Bitumenbahnen im Rahmen des vorschlagsgemäßen Verfahrens verarbeitet werden können, ist nicht auszuschließen, dass die einzelnen Bitumenbahnen sehr unterschiedlich ausgestaltet sind, so dass sie unterschiedliche Mengen an Bitumen enthalten können. Statt sämtliche Behälter stets gleichzeitig zu öffnen und die Bitumenbahnen der gesamten Behältergruppe stets praktisch gleichzeitig auszuwechseln, kann der Wechsel einer Bitumenbahn bei dieser Ausgestaltung des Verfahrens individuell erfolgen. Dies ist auch insofern vorteilhaft, als eine längerfristige Unterbrechung im Betrieb der Vorrichtung vermieden wird, wie sie ansonsten unausweichlich wäre, wenn die Durchströmung sämtlicher Behälter unterbrochen würde, um sämtliche Behälter praktisch gleichzeitig öffnen und die Bitumenbahnen der gesamten Behältergruppe auswechseln zu können, bevor dann sämtliche frisch befüllten Behälter geschlossen würden und deren Durchströmung wieder in Gang gesetzt würde.

Dementsprechend kann die Behandlungsdauer der einzelnen Bitumenbahnen stets daran angepasst werden, wie viel Zeit individuell erforderlich ist, um die jeweilige Bitumenbahn vollständig zu verarbeiten und das in ihr enthaltene Bitumen vollständig aus der Bitumenbahn herauszulösen. Davon ausgehend, dass bestimmte Typen von Bitumenbahnen hergestellt werden, kann beispielsweise anhand einer Gewichtserfassung der jeweiligen Bitumenbahn mit ausreichender Genauigkeit bestimmt werden, wie viel Bitumen die jeweilige Bitumenbahn eines bestimmten Typs aufgrund ihres Gewichts enthält, so dass dementsprechend die Behandlungsdauer dieser Bitumenbahn individuell festgelegt werden kann.

In einer Ausgestaltung des Verfahrens kann vorgesehen sein, dass ein Timer gestartet wird, nachdem ein Behälter geöffnet und mit einer Bitumenbahn befüllt worden ist, und dass die Lösemittelleitung zu diesem Behälter nach Ablauf einer bestimmten Zeitdauer unterbrochen wird, derart, dass die Durchspülung dieses Behälters ausgesetzt wird. Es kann sich dabei um einen standardisierten Timer mit einer fest vorgegebenen Zeitdauer handeln, so dass nach Ablauf der Zeit der Behälter geöffnet und kontrolliert werden kann, ob die Bitumenbahn ausgetauscht werden kann oder noch weiter behandelt werden soll. Es kann sich jedoch auch um einen individuell programmierbaren Timer handeln, so dass wie oben bereits beschrieben die Behandlungsdauer der Bitumenbahn zunächst abgeschätzt werden kann, beispielsweise durch eine individuelle Gewichtserfassung der Bitumenbahn, und so dass anhand dieser Schätzung der Timer eingestellt werden kann.

Der Timer kann beispielsweise als ein Funktionsmodul einer elektronischen Anlagensteuerung ausgestaltet sein, die zur Steuerung der gesamten Vorrichtung ohnehin vorgesehen sein kann. Insbesondere kann vorgesehen sein, dass jedem Behälter ein eigener Timer zugeordnet ist, so dass auch bei einer nicht gleichzeitigen Befüllung der Behälter und / oder bei einer Befüllung mit unterschiedlich ausgestalteten Bitumenbahnen, die unterschiedliche Behandlungszeiten erfordern, stets jedem Behälter die jeweils optimale Durchspülungszeit zugeordnet werden kann.

In einer Ausgestaltung des Verfahrens kann vorgesehen sein, dass zunächst die Lösemittelleitung zu einem Behälter unterbrochen wird und dann das in dem Behälter befindliche Lösemittel aus dem Behälter geleert wird. Auf diese Weise kann sichergestellt werden, dass zusammen mit dem Lösemittel auch kleinere Partikel und ähnliche Rückstände aus dem Behälter herausgeschwemmt werden. Beispielsweise kann das Lösemittel passiv abgelassen werden, wenn eine entsprechend tief am Behälter angeordnete Auslassöffnung geöffnet wird und das Lösemittel einfach aufgrund der Schwerkraft aus dem Behälter ausströmt. Alternativ kann das Lösemittel aktiv abgelassen werden, indem es mittels einer Pumpe aus dem Behälter herausgepumpt wird.

In einer Ausgestaltung des Verfahrens kann vorgesehen sein, dass das aufkonzentrierte Lösemittel, welches für die Bereitstellung eines Voranstrichmaterials verwendet wird, unmittelbar als Voranstrichmaterial verwendet wird. Diese besonders wirtschaftlichen Ausgestaltung des Verfahrens ist dann möglich, wenn beispielsweise keine zusätzlichen Additive dem Lösemittel zugesetzt werden müssen, um die gewünschte Qualität des Voranstrichs zu erreichen. Dies kann beispielsweise der Fall sein, wenn bereits die Bitumenbahn selbst die gewünschten Additive in der gewünschten Menge enthält und diese Additive gemeinsam mit dem Bitumen durch das Lösemittel aus der Bitumenbahn herausgelöst werden.

Alternativ dazu kann jedoch vorgesehen sein, dass dem mit Bitumen aufkonzentrierten Lösemittel, welches für die Bereitstellung eines Voranstrichmaterials verwendet wird, einer oder mehrere Stoffe zugesetzt werden, bevor es als Voranstrichmaterial verwendet wird. Dies kann stets dann vorteilhaft sein, wenn Art und Menge der Additive, die in der Bitumenbahn vorhanden sind, nicht der gewünschten Art und Menge der Additive entsprechen, die in dem Voranstrich gewünscht sind. Insbesondere wenn das Voranstrichmaterial Additive enthalten soll, die in der Bitumenbahn überhaupt nicht vorhanden sind, können derartige Additive vorteilhaft dem aufkonzentrierten Lösemittel zugegeben werden, um das gewünschte Voranstrichmaterial zu erhalten.

Eine Anlage, die zum Betreiben des bislang beschriebenen Verfahrens geeignet ist, weist wenigstens einen Behälter auf, der dazu bestimmt ist, eine Bitumenbahn aufzunehmen. Der Behälter kann aufrecht ausgerichtet sein. Der Behälter kann oben einen Deckel aufweisen, welche wahlweise geöffnet oder geschlossen werden kann, um bei offenem Deckel die Beschickung des Behälters mit einer Bitumenbahn zu ermöglichen und bei geschlossenem Deckel flüssige oder gasförmige Emissionen in Form von Spritzern oder Lösemitteldämpfen zu vermeiden. Der Behälter kann röhrenförmig ausgestaltet sein, was angesichts der im aufgerollten Zustand bereitgestellten Bitumenbahn optimal an die Form der Bitumenbahn angepasst ist und im Vergleich zu einem Behälter mit einem eckigen Querschnitt strömungsberuhigte, nicht wirksame Bereiche innerhalb des Behälters verhindert. Zudem können zur Herstellung der Behälter Rohre mit einem geeigneten Durchmesser als handelsüblich erhältliche Halbzeuge Verwendung finden, um eine möglichst wirtschaftliche Ausgestaltung der Anlage zu unterstützen. Zur gleichzeitigen Behandlung mehrerer Bitumenbahnen kann die Anlage mehrere Behälter aufweisen. Weiterhin weist die Anlage einen Sammeltank und Leitungen auf, die den Behälter und den Sammeltank miteinander verbinden, und schließlich auch eine Pumpe, die dazu bestimmt ist, ein Lösemittel im Kreislauf durch den Sammeltank, die Leitungen und den Behälter zu führen.

Weiterhin kann die Anlage vorteilhaft folgende Bestandteile enthalten:
▪ einen Filter, um aus der Bitumenbahn stammende Partikel zurückzuhalten. Der Filter kann ein durchströmbares Filtermedium aufweisen, wobei die Durchlässigkeit dieses Filtermediums so gewählt sein kann, dass die Partikel, mit denen eine Bitumenbahn bestreut ist, zurückgehalten werden. Der Filter kann alternativ oder auch ergänzend zu einem solchen Filter, der ein durchströmbares Filtermedium aufweist, als Abscheider ausgestaltet sein, bei dem beispielsweise die vergleichsweise schweren erwähnten Partikel in einer Absetzkammer, durch Zentrifugalkraft oder dergleichen aus dem Bitumen halte Lösemittelstrom abgeschieden werden,
▪ eine Heizung, um das Lösemittel mit einer Temperatur oberhalb der sogenannten Raumtemperatur von 20 °C auf die Bitumenbahnen einwirken lassen zu können,
▪ eine Handhabungseinrichtung wie eine Krananlage oder dergleichen, um die Bitumenbahnen maschinell in die Behälter einbringen zu können. Die Handhabungseinrichtung kann in Art eines einarmigen Manipulators ausgestaltet sein, der eine bereitgestellte Bitumenbahn erfassen und in einen einzigen Behälter einbringen kann, dem dieser Manipulator zugeordnet ist. Vorteilhaft können mehrere Behälter vorgesehen sein und die Handhabungseinrichtung kann so ausgestaltet sein, dass sie eine bereitgestellte Bitumenbahn erfasst und wahlweise in einen von zwei oder mehreren Behältern einbringen kann. Beispielsweise können zwei oder mehrere Behälter im Erfassungsbereich des Manipulators angeordnet sein. Wenn die Anlage eine Vielzahl von Behältern aufweist, können dementsprechend mehrere Manipulatoren vorgesehen sein, um jeden der Behälter maschinell mit einer Bitumenbahn beschicken zu können. Mittels einer Krananlage, die an Schienen läuft, welche beispielsweise oberhalb der Behälter verlaufen, lassen sich problemlos sämtliche Behälter erreichen. Die Krananlage kann einen Greifer aufweisen, der zur Aufnahme einer bereitgestellten Bitumenbahn dient, welche dann mittels der Krananlage zu dem jeweils gewünschten Behälter verbracht und dort in den Behälter eingefüllt werden kann,
▪ einen Abfallbehälter zur Aufnahme der Rückstände wie Granulat, Folien, Trägermaterial oder dergleichen, die in dem Behälter verbleiben, nachdem das Bitumen aus der Bitumenbahn herausgelöst worden ist,
▪ ein Zwischenlager, in welchem Bitumenbahnen bereitgestellt werden können, so dass kurze Wechselzeiten aufgrund kurzer Wege ermöglicht werden können, wenn ein Behälter geöffnet und die Rückstände einer Bitumenbahn aus dem Behälter entfernt werden sowie anschließend eine neue Bitumenbahn in den Behälter eingebracht wird.

Eine beispielhafte Ausgestaltung des vorschlagsgemäßen Verfahrens sowie ein Ausführungsbeispiel einer vorschlagsgemäßen Anlage wird anhand rein schematischer Zeichnungen erläutert. Dabei zeigt
- Fig. 1: eine Draufsicht auf eine Anlage, die dazu dient, Ausschuss-Bitumenbahnen für die Erzeugung eines Voranstrichmaterials zu verarbeiten, und
- Fig. 2: eine horizontale Ansicht auf die Anlage von Fig. 1.

In den Zeichnungen ist eine Anlage 1 dargestellt, die zwei Gruppen von jeweils fünf in Reihe geschalteten Behältern 2 aufweist. Am Ende jeder Gruppe ist links neben den Behältern 2 jeweils ein Filter 3 angeordnet. Die beiden Behältergruppen sind umgeben von einem Gitterboden 4, welches oberhalb des Bodens angeordnet ist und über eine Treppe 5 zugänglich ist. Die Anlage 1 ist in der Ecke eines Gebäudes aufgebaut, und die beiden an diese Ecke grenzenden Wände des Gebäudes sind jeweils mit 6 gekennzeichnet. Außerhalb des Gitterbodens 4 sind vier Kranstützen 7 angeordnet.

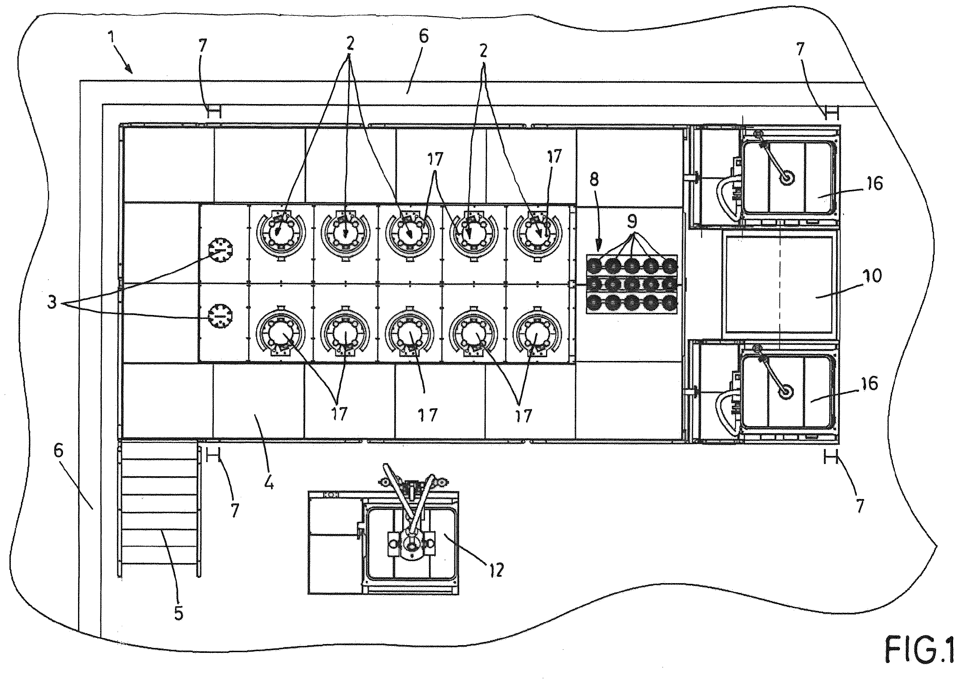

Auf der den Filtern 3 gegenüberliegenden, rechten Seite ist neben den beiden Gruppen von Behältern 2 ein Zwischenlager 8 angeordnet, in dem, wie aus Fig. 1 ersichtlich, 15 in Rollenform konfektionierte Bitumenbahnen 9 bevorratet sind. Der kreisförmige Querschnitt der Bitumenbahnen 9 ist ebenfalls aus Fig. 1 erkennbar. Die Behälter 2 sind in Anpassung an diese Form der Bitumenbahnen 9 als Röhren mit einem kreisrunden Querschnitt ausgestaltet.

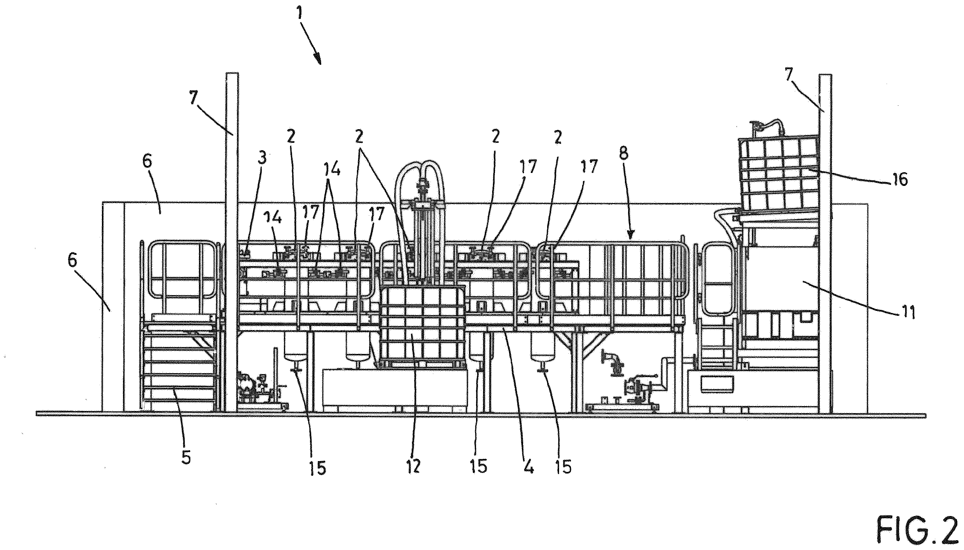

Rechts neben dem Zwischenlager 8 ist ein Abfallbehälter 10 ersichtlich, der zwischen zwei aus Fig. 2 ersichtlichen Sammelbehältern 11 angeordnet ist, die Lösemittel enthalten. Ein ähnlicher, jedoch leerer Behälter ist als Produktbehälter 12 bezeichnet und in Fig. 1 rechts neben der Treppe 5 dargestellt. Weiterhin sind aus Fig. 1 zwei Lösemittelbehälter 16 erkennbar, die als handelsübliche IBC-Behälter ausgestaltet sind. In ihnen wird frisches Lösemittel herangeführt, und aus ihnen werden die Sammelbehälter 11 schwerkraftunterstützt mit frischem Lösemittel befüllt, wobei diese Befüllung der Sammelbehälter 11 bedarfsgerecht erfolgt, so dass die beiden Lösemittelbehälter 16 nach und nach und ggf. unterschiedlich schnell geleert werden.

In der Anlage 1 wird ein bituminöses Voranstrichmaterial hergestellt. Hierzu werden Bitumenbahnen 9 von oben in die Behälter 2 eingebracht und die Behälter 2 anschließend mit Deckeln 17 verschlossen, die an der Oberseite der Behälter 2 vorgesehen sind. Weitere Bitumenbahnen 9 werden in dem Zwischenlager 8 bereitgestellt, wobei aus Fig. 2 deutlich wird, dass die Anlage 1 Platz für die Zwischenlagerung von mehr als den dargestellten 15 Stück Bitumenbahnen 9 bietet. Die transportablen Lösemittelbehälter 16, die als IBC-Behälter ausgestaltet sind und frisches Lösemittel enthalten, werden in ihrer aus den Zeichnungen ersichtlichen Position oberhalb der Sammelbehälter 11 aufgebaut und mittels einer Schlauch- oder Rohrleitung können so die Sammelbehälter 11 mit dem Lösemittel befüllt werden. Die Sammelbehälter 11 sind an ein Leitungsnetz angeschlossen, welches in den Zeichnungen aus Gründen der Übersichtlichkeit nicht vollständig dargestellt ist und welches sowohl starre Rohrleitungen als auch flexible Schlauchabschnitte enthält.

Das Lösemittel wird mittels einer Pumpe aus einem Sammelbehälter 11 in einen ersten Behälter 2 gefördert, nämlich in den in den Zeichnungen jeweils rechten Behälter 2 einer Gruppe. Von dort strömt das Lösemittel weiter in den nächsten Behälter 2 usw., bis es schließlich in den dieser Gruppe zugeordneten Filter 3 strömt und von dort in den Sammelbehälter 11 zurückgepumpt wird. Auf diese Weise wird das Lösemittel im Kreislauf geführt, wobei es ggf. eine Heizung passiert, um auf eine Temperatur von mehr als 20 °C aufgeheizt zu werden.

Die einzelnen Bitumenbahnen 9 sind erwartungsgemäß nicht identisch ausgestaltet, so dass aus der Gruppe von fünf Behältern 2 eine Bitumenbahn 9 als erste vollständig bearbeitet sein wird, indem ihr Bitumenmaterial von dem Lösemittel vollständig aus der Bitumenbahn herausgelöst sein wird. Der entsprechende Zeitpunkt kann zunächst durch Kontrollen ermittelt und abgespeichert werden, so dass er später als Erfahrungswert abgerufen werden kann und je nach Beschaffenheit der jeweiligen Bitumenbahnen 9 der betreffende Behälter 2 nach der entsprechenden Behandlungsdauer geöffnet werden kann. Hierzu wird der Deckel 17 geöffnet, so dass das Innere des Behälters 2 und dessen Inhalt von oben zugänglich ist. Eine Krananlage, die über die Kranstützen 7 auf dem Untergrund abgestürzt ist, in Fig. 2 jedoch nicht selbst ersichtlich ist, dient dazu, mittels geeigneter Greifer oder ähnlicher Werkzeuge die Behälter 2 zu bestücken und unerwünschte Reste aus ihnen zu entfernen.

Vor dem Öffnen eines Behälters 2 wird dieser aus dem Strömungskreislauf Lösemittels herausgenommen. Hierzu werden Ventile umgeschaltet, von denen in Fig. 2 einige mit 14 angedeutet sind. Die übrigen Behälter 2 derselben Gruppe werden weiterhin von dem Lösemittel durchströmt, während der betreffende Behälter 2 von dem Kreislauf abgekoppelt ist und beispielsweise auch das darin enthaltene Lösemittel abgezogen werden kann. Rückstände der vollständig behandelten Bitumenbahn 9 werden aus dem Behälter 2 entfernt und in dem Abfallbehälter 10 gelagert.

Insbesondere großflächige Reste wie Träger- und Abdeckfolien, die eine spätere Durchströmung des Behälters 2 behindern könnten, werden entfernt. Beispielsweise kann ein siebkorbartiger Innenbehälter aus dem Behälter 2 herausgehoben werden, der diese großflächigen Reste enthält. Die Entfernung der großflächigen Reste erfolgt nach der Behandlung jeder Bitumenbahn, bevor eine neue Bitumenbahn in den Behälter 2 eingebracht wird. Reste in Form von kleineren Partikeln, die z.B. von der Bestreuung der Bitumenbahn herrühren, werden entweder mit dem Lösemittelstrom innerhalb der Anlage 1 transportiert und gelangen in den Filter 3, oder sie sinken innerhalb des Behälters 2 zu Boden, wo sie entweder nach der Behandlung jeder Bitumenbahn abgezogen werden können oder über einen längeren Zeitraum gesammelt und in geeigneten Intervallen abgezogen werden können.

Eine neue Bitumenbahn 9 wird mittels der erwähnten Krananlage aus dem Zwischenlager 8 entnommen und in den geöffneten Behälter 2 eingebracht. Bei Verwendung des erwähnten Innenbehälters kann die neue Bitumenbahn 9 entweder mitsamt dem Innenbehälter in den Behälter 2 eingebracht werden, oder zunächst wird der Innenbehälter in den Behälter 2 zurückgeführt, und anschließend wird die neue Bitumenbahn, wenn sie in den Behälter 2 eingebracht wird, in dem Innenbehälter aufgenommen. Anschließend wird der Deckel 17 dieses Behälters 2 wieder verschlossen, so dass er nun erneut mittels der Ventile 14 in den Lösemittel-Kreislauf eingebunden werden kann.

Die Handhabung der Bitumenbahnen 9 sowie der großflächigen Reste, sowie des ggf. verwendeten Innenbehälters erfolgt mithilfe einer Krananlage, nämlich eines Hallenkrans, der durch die Kranstützen 7 im Abstand oberhalb des Gitterbodens 4 und der übrigen Einrichtungen der Anlage 1 verfahren werden kann.

Innerhalb des Lösemittelkreislaufs ist ein Sensor angeordnet, der die Konzentration des Bitumens im Lösemittel unmittelbar erfasst, oder der eine Messgröße liefert, aus welcher die Konzentration des Bitumens im Lösemittel berechnet werden kann. Wenn diese Konzentration den gewünschten Wert erreicht hat, das Lösemittel also mit Bitumen in dem gewünschten Umfang angereichert worden ist und sich das Bitumen in dem Lösemittel auf das gewünschte Maß aufkonzentriert hat, wird das aufkonzentrierte Lösemittel in den Produktbehälter 12 gepumpt. Die Lösemittelbehälter 16 und der Produktbehälter 12 sind grundsätzlich gleich ausgestaltet und weisen das gleiche Fassungsvermögen auf, z.B. jeweils 1000 I. Die Sammelbehälter 11 werden jedoch aus ihrem jeweils zugeordneten Lösemittelbehälter 16 nur teilweise gefüllt und enthalten beispielsweise zunächst lediglich etwa 600 I frisches Lösemittel. Die Menge des Lösemittels, welches in der Anlage 1 im Kreislauf geführt wird, nimmt während des Verfahrens zu, je mehr Bitumen aus den Bitumenbahnen 9 herausgelöst und in dem Lösemittel aufgenommen wird. Dementsprechend ist das Fassungsvermögen des Produktbehälters 12 ausreichend groß bemessen, um die entsprechend große Menge des aufkonzentrierten Lösemittels aus einem Sammelbehälter 11 aufnehmen zu können.

Die beiden Gruppen von jeweils fünf Behältern 2 werden gleichzeitig betrieben, also gleichzeitig von Lösemittel durchströmt, wobei aufgrund der beiden Sammelbehälter 11 zwei voneinander getrennte Lösemittel-Kreisläufe vorliegen. Dementsprechend können zeitlich versetzt beide Kreisläufe in den Produktbehälter 12 umgepumpt werden, wobei das Fassungsvermögen des Produktbehälters 12 jeweils zur Aufnahme des aufkonzentrierten Lösemittels eines einzigen Kreislaufs ausreicht.

An seinem unteren Ende ist jeder Behälter 2 mit einem Klöpperboden und einem Auslass 15 versehen, so dass Materialrückstände in Form von kleineren Partikeln, die in dem Behälter 2 eine Art Bodensatz bilden und weder mit dem Lösemittel-Kreislauf bis zum Filter 3 gefördert werden noch in dem ggf. verwendeten Innenbehälter zurückgehalten werden, aus dem Behälter 2 abgelassen werden können.

### Bezugszeichen:

- 1: Anlage
- 2: Behälter
- 3: Filter
- 4: Gitterboden
- 5: Treppe
- 6: Wand
- 7: Kranstütze
- 8: Zwischenlager
- 9: Bitumenbahn
- 10: Abfallbehälter
- 11: Sammelbehälter
- 12: Produktbehälter
- 14: Ventil
- 15: Auslass
- 16: Lösemittelbehälter
- 17: Deckel

## Patentansprüche

1. Verfahren zur Herstellung eines Voranstrichmaterials, welches Bitumen, Lösemittel und Additive enthält, **gekennzeichnet durch die folgenden Verfahrensschrit**te:
• eine Bitumenbahn (9) wird in einen Behälter (2) eingebracht,
• die Bitumenbahn (9) wird in dem Behälter (2) von einem Lösemittel umspült,
• das Lösemittel wird im Kreislauf geführt,
• die Konzentration des Bitumens im Lösemittel wird wiederholt oder kontinuierlich ermittelt,
• wenn die Konzentration des Bitumens im Lösemittel einen vorbestimmten Wert erreicht hat, wird dieses aufkonzentrierte Lösemittel abgezogen und für die Bereit-stellung eines Voranstrichmaterials verwendet,
• nachdem das aufkonzentrierte Lösemittel abgezogen worden ist, wird erneut Lösemittel in den Kreislauf eingebracht, welches eine niedrige oder keine Konzentration von Bitumen aufweist.

2. Verfahren nach Anspruch 1,
**dadurch gekennzeichnet,**
**dass** die Bitumenbahn (9) in Rollenform den Behälter (2) eingebracht wird.

3. Verfahren nach Anspruch 1 oder 2,
**dadurch gekennzeichnet,**
**dass** eine Bitumenbahn (9) verwendet wird, deren Oberseite und / oder Unterseite abgedeckt ist.

4. Verfahren nach Anspruch 3,
**dadurch gekennzeichnet,**
**dass** die Oberseite und / oder Unterseite mit einer Kunststofffolie, einer Papierbahn, einer Bestreuung mit mineralischen Körperchen abgedeckt ist.

5. Verfahren nach einem der vorhergehenden Ansprüche,
**dadurch gekennzeichnet,**
**dass** eine Bitumenbahn (9) verwendet wird, die eine Trägerschicht aufweist, auf welche eine Bitumenschicht aufkaschiert ist.

6. Verfahren nach Anspruch 5,
**dadurch gekennzeichnet,**
**dass** die Trägerschicht ein Polyestervlies und / oder Glasfaservlies aufweist.

7. Verfahren nach einem der vorhergehenden Ansprüche,
**dadurch gekennzeichnet,**
**dass** der Behälter (2) als Röhre ausgestaltet ist.

8. Verfahren nach einem der vorhergehenden Ansprüche,
**dadurch gekennzeichnet,**
**dass** das Lösemittel in einen Sammelbehälter (11) und von dort in den Behälter (2) zurückgeführt wird.

9. Verfahren nach einem der vorhergehenden Ansprüche,
**dadurch gekennzeichnet,**
**dass** das Lösemittel auf eine Temperatur von mehr als 20°C erwärmt wird und im erwärmten Zustand in den Behälter (2) geführt wird.

10. Verfahren nach einem der vorhergehenden Ansprüche,
**dadurch gekennzeichnet,**
**dass** der Behälter (2) geöffnet und Rückstände aus dem Behälter (2) entfernt werden, bevor der Behälter (2) mit einer Bitumenbahn (9) erneut befüllt wird.

11. Verfahren nach einem der vorhergehenden Ansprüche,
**dadurch gekennzeichnet,**
**dass** mehrere Behälter (2) zu einer Gruppe zusammengefasst sind und gleichzeitig mit Lösemittel durchspült werden,
und **dass** ein Behälter (2) geöffnet und mit einer Bitumenbahn (9) erneut befüllt wird,
wobei hierfür zunächst die Lösemittelleitung zu diesem Behälter unterbrochen wird, derart, dass die Durchspülung dieses Behälters (2) ausgesetzt wird,
und **dass** währenddessen die anderen Behälter (2) derselben Gruppe weiterhin mit dem Lösemittel durchspült werden.

12. Verfahren nach einem der vorhergehenden Ansprüche,
**dadurch gekennzeichnet,**
**dass** ein Timer gestartet wird, nachdem ein Behälter (2) geöffnet und mit einer Bitumenbahn (9) befüllt worden ist, und dass die Lösemittelleitung zu diesem Behälter (2) nach Ablauf einer bestimmten Zeitdauer unterbrochen wird, derart, dass die Durchspülung dieses Behälters (2) ausgesetzt wird.

13. Verfahren nach einem der Ansprüche 10 bis 12,
**dadurch gekennzeichnet,**
**dass** zunächst die Lösemittelleitung zu einem Behälter (2) unterbrochen wird und dann das in dem Behälter (2) befindliche Lösemittel aus dem Behälter (2) geleert wird.

14. Verfahren nach einem der vorhergehenden Ansprüche,
**dadurch gekennzeichnet,**
**dass** das aufkonzentrierte Lösemittel, welches für die Bereitstellung eines Voranstrichmaterials verwendet wird, unmittelbar als Voranstrichmaterial verwendet wird.

15. Verfahren nach einem der Ansprüche 1 bis 13,
**dadurch gekennzeichnet,**
**dass** dem aufkonzentrierten Lösemittel, welches für die Bereitstellung eines Voranstrichmaterials verwendet wird, einer oder mehrere Stoffe zugesetzt werden, bevor es als Voranstrichmaterial verwendet wird.

16. Vorrichtung zum Betreiben eines Verfahrens nach einem der vorhergehenden Ansprüche,
mit einem Behälter (2), der dazu bestimmt ist, eine Bitumenbahn (9) aufzunehmen,
einem Sammeltank (11),
Leitungen, welche den Behälter (2) und den Sammeltank (11) miteinander verbinden,
und mit einer Pumpe, die dazu bestimmt ist, ein Lösemittel mittels der Pumpe im Kreislauf durch den Sammeltank (11), die Leitungen und den Behälter (2) zu führen.

## Claims

1. Method for producing a primer material containing bitumen, solvents and additives, **characterised by** the following steps:
• a bitumen sheet (9) is placed in a container (2),
• the bitumen sheet (9) is immersed in a solvent in the container (2),
• the solvent circulates,
• the concentration of bitumen in the solvent is repeatedly or continuously monitored,
• when the concentration of bitumen in the solvent has reached a predetermined value, this solvent, whose bitumen concentration has now increased, is removed and used to prepare a primer material,
• after the concentrated solvent has been removed, solvent is reintroduced into the cycle, which has a low or no concentration of bitumen.

2. Method in accordance with claim 1, **characterised in that** the bitumen sheet (9) is placed in the container (2) in roll form.

3. Method in accordance with claim 1 or claim 2, **characterised in that** a bitumen sheet (9) is used, the upper side and/or underside of which is covered.

4. Method in accordance with claim 3, **characterised in that** the upper side and/or underside is covered with a plastic film, with a paper web, and/or with a sprinkling of mineral particles.

5. Method in accordance with any one of the preceding claims, **characterised in that** a bitumen sheet (9) is used that has a backing layer onto which a layer of bitumen is laminated.

6. Method in accordance with claim 5, **characterised in that** the backing layer comprises a polyester fleece and/or fibreglass fleece.

7. Method in accordance with any one of the preceding claims, **characterised in that** the container (2) is shaped as a tube.

8. Method in accordance with any one of the preceding claims, **characterised in that** the solvent is returned to a collecting tank (11) and from there to the container (2).

9. Method in accordance with any one of the preceding claims, **characterised in that** the solvent is heated to a temperature of more than 20 °C and fed into the container (2) in a heated state.

10. Method in accordance with any one of the preceding claims, **characterised in that** the container (2) is opened and residues are removed from the container (2) before the container (2) is refilled with a bitumen sheet (9).

11. Method in accordance with any one of the preceding claims, **characterised in that** several containers (2) are combined to form a group and are simultaneously flushed with solvent, and that a container (2) is opened and refilled with a bitumen sheet (9), the solvent pipe to this container initially being interrupted in such a way that the flushing of this container (2) is suspended and the other containers (2) in the same group continue to be flushed with the solvent in the meantime.

12. Method in accordance with any one of the preceding claims, **characterised in that** a timer is started after a container (2) has been opened and filled with a bitumen sheet (9) and that the solvent pipe to this container (2) is interrupted after a certain period of time has elapsed in such a way that the flushing of this container (2) is suspended.

13. Method in accordance with any one of claims 10 to 12, **characterised in that**, that initially the solvent pipe to a container (2) is interrupted and then the solvent in the container (2) is removed from the container (2).

14. Method in accordance with any one of the preceding claims, **characterised in that** the concentrated solvent used to prepare a primer material is used immediately as a primer material.

15. Method in accordance with any one of claims 1 to 13, **characterised in that**, that one or more substances is or are added to the concentrated solvent used to prepare a primer material before it is used as a primer material.

16. Device to operate a method in accordance with any one of the preceding claims, with a container (2), that is intended to incorporate a bitumen sheet (9), with a collecting tank (11), with pipes that connect the container (2) and the collecting tank (11) together, and with a pump intended to circulate a solvent through the collecting tank (11), the pipes and the container (2) using the pump.

## Revendications

1. Procédé pour la préparation d'un matériau de pré-couche contenant du bitume, un solvant et des additifs, **caractérisé par** les étapes de procédé suivantes:
• une bande de bitume (9) est introduite dans un récipient (2),
• dans le récipient (2), la bande de bitume (9) est baignée par un flux de solvant,
• le solvant circule en circuit fermé,
• la concentration du bitume dans le solvant est déterminée répétitivement ou continuellement,
• lorsque la concentration du bitume dans le solvant a atteint une valeur prédéfinie, ce solvant - dont la concentration en bitume est accrue - est retiré puis utilisé pour la préparation d'un matériau de pré-couche,
• après qu'a été retiré le solvant dans lequel s'est concentré le bitume, du solvant présentant une concentration faible ou nulle en bitume est à nouveau introduit dans le circuit.

2. Procédé selon la revendication 1, **caractérisé en ce que** la bande de bitume (9) est introduite sous forme de rouleau dans le récipient (2).

3. Procédé selon la revendication 1 ou 2, **caractérisé en ce qu'**est utilisée une bande de bitume (9) dont le dessus et/ou le dessous est recouvert.

4. Procédé selon la revendication 3, **caractérisé en ce que** le dessus et/ou le dessous est/sont recouvert(s) d'un film en plastique, d'une bande en papier et/ou de corpuscules minéraux saupoudrés dessus.

5. Procédé selon l'une des revendications précédentes, **caractérisé en ce qu'**est utilisée une bande de bitume (9) qui présente une couche porteuse sur laquelle une couche de bitume a été contrecollée.

6. Procédé selon la revendication 5, **caractérisé en ce que** la couche porteuse présente un non-tissé en polyester et/ou un non-tissé en fibres de verre.

7. Procédé selon l'une des revendications précédentes, **caractérisé en ce que** le récipient (2) est configuré en forme de tuyau.

8. Procédé selon l'une des revendications précédentes, **caractérisé en ce que** le solvant est ramené dans un récipient collecteur (11) et, de là, dans le récipient (2).

9. Procédé selon l'une des revendications précédentes, **caractérisé en ce que** le solvant est porté à une température supérieure à 20 °C et qu'il est conduit dans cet état échauffé au récipient (2).

10. Procédé selon l'une des revendications précédentes, **caractérisé en ce que** le récipient (2) est ouvert et que des résidus sont retirés du récipient (2) avant qu'une bande de bitume (9) soit à nouveau introduite dans le récipient (2).

11. Procédé selon l'une des revendications précédentes, **caractérisé en ce que** plusieurs récipients (2) sont réunis pour former un groupe et qu'ils sont simultanément rincés avec du solvant, et qu'un récipient (2) est ouvert et qu'une nouvelle bande de bitume (9) est introduite dedans, sachant qu'à cette fin la conduite de solvant aboutissant à ce récipient est dans un premier temps fermée, de sorte que le rinçage de ce récipient (2) est suspendu, et que pendant ce temps les autres récipients (2) du même groupe continuent d'être rincés avec le solvant.

12. Procédé selon l'une des revendications précédentes, **caractérisé en ce qu'**une minuterie est lancée après qu'un récipient (2) a été ouvert et qu'une bande de bitume (9) a été introduite dedans, et que la conduite de solvant aboutissant à ce récipient (2) est fermée après l'expiration d'un certain laps de temps, de sorte que le rinçage de ce récipient (2) est suspendu.

13. Procédé selon l'une des revendications 10 à 12, **caractérisé en ce que** d'abord la conduite de solvant aboutissant à un récipient (2) est fermée et qu'ensuite le solvant présent dans ce récipient (2) est retiré du récipient (2).

14. Procédé selon l'une des revendications précédentes, **caractérisé en ce que** le solvant qui s'est concentré en bitume et qui est utilisé pour préparer un matériau de pré-couche est directement utilisé comme matériau de pré-couche.

15. Procédé selon l'une des revendications 1 à 13, **caractérisé en ce qu'**au solvant qui s'est concentré en bitume et qui est utilisé pour préparer un matériau de pré-couche est/sont ajoutée(s) une ou plusieurs substances avant qu'il soit utilisé comme matériau de pré-couche.

16. Dispositif pour l'exploitation d'un procédé selon l'une des revendications précédentes, avec un récipient (2) destiné à recevoir une bande de bitume (9), avec un réservoir collecteur (11), avec des conduites qui relient ensemble le récipient (2) et le réservoir collecteur (11), et avec une pompe destinée à faire circuler un solvant au moyen de la pompe dans le circuit en traversant le réservoir collecteur (11), les conduites et le récipient (2).
